# EUROPÄISCHE PATENTSCHRIFT

(11) **EP 0 932 539 B1**
(45) Veröffentlichungstag und Bekanntmachung des Hinweises auf die Patenterteilung: **02.05.2002**
(21) Anmeldenummer: 97913151.3
(22) Anmeldetag: 17.10.1997
(51) Int. Cl.: B60T 10/02

(54) **BREMSMOMENTENANPASSUNG EINES PRIMÄRSYSTEMS IN ABHÄNGIGKEIT VON DER GETRIEBEGANGSTELLUNG**
SYSTEM FOR ADAPTING THE BRAKING MOMENT OF A PRIMARY SYSTEM AS A FUNCTION OF THE GEAR SPEED SETTING
ADAPTATION DU COUPLE DE FREINAGE D'UN SYSTEME PRIMAIRE EN FONCTION DE LA POSITION DE PASSAGE DES VITESSES DE LA BOITE

(30) Priorität: 18.10.1996 DE 19643079
(43) Veröffentlichungstag der Anmeldung: 04.08.1999
(73) Patentinhaber: Voith Turbo GmbH & Co. KG, 89522 Heidenheim (DE)
(72) Erfinder: ROSE, Peter, D-89522 Heidenheim (DE); HEILINGER, Peter, D-74564 Crailsheim (DE); SCHOOF, Gunter, D-74589 Satteldorf (DE); SCHERER, Roland, D-74564 Crailsheim (DE)
(74) Vertreter: Dr. Weitzel & Partner
(86) Internationale Anmeldenummer: EP9705726
(87) Internationale Veröffentlichungsnummer: WO9817518

(56) Entgegenhaltungen:
- WO-A-94/27845
- DE-A- 4 341 213
- DE-A- 4 408 349
- GB-A- 2 018 374
- US-A- 5 357 444

## Beschreibung

Die Erfindung betrifft eine Regeleinrichtung für ein Primärbremssystem, insbesondere einen Primärretarder in einem Fahrzeug gemäß dem Oberbegriff des Anspruches 1 sowie ein Verfahren zur Regelung eines Primärbremssystems, insbesondere Primärretarders in einem Fahrzeug gemäß dem Oberbegriff von Anspruch 11.

Als Primärbremssysteme bezeichnet man allgemein Bremssysteme, die vor Kupplung und Getriebe angeordnet sind (siehe hierzu: Kfz-Anzeiger, 44. Jahrgang, 1991, Bericht "Sicher bergab", S. 13 und Lastauto Omnibus 4/1991, Bericht "Gegen den Strom", S. 30). Sekundärbremssysteme sind dagegen entweder direkt am Getriebe angeflanscht oder in den nachfolgenden Wellenstrang eingebaut und wirken auf die Antriebsachsen.

Neben Primärretardern sind unter anderem auch noch die folgenden Primärbremssysteme bekanntgeworden:
- die Auspuffklappenbremse
- die Konstantdrossel und
- die Kompressionsbremse.

Bei der Auspuffklappenbremse wird der Staudruck im Auspuffsystem zur Erzeugung eines Bremsmomentes ausgenutzt. Im Motorbremsbetrieb wird der Abasstrang nahezu vollständig verschlossen und damit im Ladungswechseltakt das Ausschieben der Zylinderfüllung gegen den im Abgaskrümmer herrschenden Abgasgegendruck erschwert und somit die Bremsleistung des Motors erhöht.

Die Konstantdrossel (Kfz-Anzeiger; 44. Jahrgang 1991, Bericht "Sicher bergab", S. 10-13) ist ein zusätzlich in den Zylinderkopf integriertes Ventil, ein sogenanntes Dekompressionsventil, wodurch der Expansionsdruck auf den Kolben im dritten Arbeitstakt und somit die Beschleunigung des Kolbens erheblich minimiert wird. Hierdurch ergibt sich eine Differenz aus Kompressions- und Expansionsarbeit, die für eine Erhöhung der Motorbremsleistung genutzt werden kann. Insbesondere ist ein solches Primärbremssystem auch einstellbar, beispielsweise in dem bestimmte Drosselstellungen eingestellt werden.

In einer Weiterbildung der Konstantdrossel-Motorbremse ist vorgesehen, das Dekompressionsventil nicht während des gesamten Arbeitsspieles offenzuhalten, sondern nur noch während einer kurzen Zeitspanne (siehe hierzu: MTZ Motortechnische Zeitschrift 56 (1995) 7/8, S. 418-423; "Die neue Dekompressionsventil-Motorbremse (DVB) von Mercedes-Benz").

Die Ansteuerung einer solchen Motorbremse kann beispielsweise dadurch erfolgen, daß der Pumpenhochdruck durch gezielte Ansteuerung eines als Proportionalventils ausgeführten Druckbegrenzungsventils im Pumpeninnern erfolgt, wodurch die Öffnungscharakteristik des Dekompressionsventils beeinflußt wird.

Diesbezüglich wird auf den oben genannten Artikel MTZ Motortechnische Zeitschrift 56 (1995) 7/8 S. 422 verwiesen.

Die Kompressionsbremse ist, wie die Konstantdrossel, eine Motorbremse. Über eine Ventilsteuerung wird bei der Kompressionsbremse die Kompression abgebaut, was, wie bei der Konstantdrossel-Motorbremse, zu einer erheblichen Erhöhung der Motorbremsleistung führt (siehe hierzu: Kfz-Anzeiger, 47. Jahrgang, 1/1994, Bericht: "Elegant verpackt - Fahrbericht Volvo FH", S. 10-12).

Während die Regeleinrichtung und das Regelverfahren gemäß der vorliegenden Erfindung bei jedweden Primärbremssystemen, wie oben beschrieben, Anwendung finden kann, liegt ein besonderes Anwendungsgebiet für die vorliegende Erfindung im Bereich der Primärretarder, die im Gegensatz zum Sekundärretarder, der normalerweise zwischen Getriebe und Gelenkwelle angeordnet ist, wie zuvor beschrieben, direkt auf den Motor wirken. Ein Primärretarder, der mit dem Motor in ständiger Triebverbindung steht, ist beispielsweise aus der deutschen Patentschrift DE 44 08 349 bekannt, deren Offenbarungsgehalt hiermit vollumfänglich in diese Anmeldung mit einbezogen wird.

Wird ein Retarder im Bremsbetrieb betrieben, so stehen hierfür im allgemeinen die Retardergrundfunktionen "Bremsstufe" oder "V-konstant" zur Verfügung. Die Grundfunktion "Bremsstufe" ist durch eine feste Einstellung einer Bremsstufe des Retarders gekennzeichnet, die mittels eines Handbremshebels bzw. Fußpedales erfolgen kann und bei der aufgrund eines fest vorgegebenen Parametersatzes ein bestimmtes Bremsmoment eingestellt wird, das sich zwischen einem minimalen Bremsmoment MRetₘᵢₙ und dem maximalen Bremsmoment MRetₘₐₓ für diese Retarderbremsstufe bewegt.

Bei der Grundfunktion "V-konstant" kann der Retarder beispielsweise steuerungstechnisch mit der Tempomatfunktion der Motorelektronik gekoppelt werden, und es wird eine Retarderbremsung derart vorgenommen, daß ein regelbares Bremsmoment eingestellt wird, so daß sich eine konstante Geschwindigkeit beispielsweise bei Bergabfahrt ergibt.

Regeleinrichtungen bzw. Verfahren zur Regelung eines Retarders in bezug auf sein Bremsmoment sind beispielsweise aus der DE 43 41 213, deren Offenbarungsgehalt hiermit vollumfänglich in diese Anmeldung einbezogen wird, bekanntgeworden.

Gemäß der DE 43 41 213 ist als Regelalgorithmus vorgeschlagen, die Priorität der einzelnen Systeme für bestimmte Einsatzfälle festzulegen. So ist beispielsweise vorgesehen, bei einer gleichzeitigen Betätigung von Retarder und Gaspedal bei Überschreitung einer vorgegebenen Maximalgeschwindigkeit immer dem Retarder Priorität einzuräumen. Wird die Konstantgeschwindigkeitsfunktion des Retarders aktiviert, so schlägt die Anmeldung vor, das Leistungsstellglied der Antriebsmaschine derart zu verstellen, daß die Leerlaufposition erreicht ist.

Aus GB-A-2 018 374 ist bekannt, den Retarder derart zu steuern, daß das Bremsmoment unabhängig von der Gangstellung konstant bleibt. US-A-5.357.444 lehrt weiterhin, beim Gangwechsel das Retarder bremsmoment zu reduzieren.

Aufgrund der direkten Kopplung korreliert bei Primärbremssystemen das Bremsmoment immer direkt mit der Motordrehzahl. Das Bremsmoment des Primärbremssystems, das an der Achse bzw. den Antriebsrädern anliegt, ist um so größer, je höher die Übersetzung innerhalb des Getriebes ist. Dies führt beim Herunterschalten in einen niedrigeren Fahrgang während des Bremsbetriebes dazu, daß das von den bremsenden Rädern übertragbare Bremsmoment in bestimmten Fahrsituationen überschritten werden kann und zu unzulässigem Radschlupf führen kann.

Aufgabe der Erfindung ist es somit, eine Regeleinrichtung sowie ein Regelverfahren für ein Primärbremssystem, insbesondere einen Retarder, aber auch beispielsweise bei einer Dekompressions-Motorbremse, anzugeben, bei dem die im Stand der Technik geschilderten Nachteile vermieden werden.

Diese Aufgabe der Erfindung wird durch die Regeleinrichtung gemäß Anspruch 1 und das Verfahren nach Anspruch 11 gelöst.

Vorteilhafte Weiterbildungen der Erfindungen sind Gegenstand der sich an die jeweilige Kategorie anschließenden Unteransprüche.

Nachfolgend wird die Erfindung beispielhaft anhand der Zeichnungen näher beschrieben.

Es zeigen:
- Fig. 1: einen Primärretarder mit einer Regeleinrichtung gemäß der Erfindung;
- Fig. 2: eine weitere Ausführungsform eines Primärretarders mit einer Regeleinrichtung gemäß der Erfindung;
- Fig. 3: die erfindungsgemäße Steuer-/Reglereinheit mit der entsprechenden Belegung der Eingänge;
- Fig. 4: eine Übersicht über die eingangsseitigen Signale, die als Meßsignale an der Steuer-/Reglereinheit gemäß Fig. 3 anliegen;
- Fig. 5: die Belegung der Ein-/Ausgänge in den Retardergrundfunktionen;
- Fig. 6: eine Übersicht über die Belegung der Eingänge bzw. Ausgänge der Steuer-/Reglereinheit gemäß Fig. 3 in den jeweiligen Betriebssituationen im Bremsbetrieb;
- Fig. 7: einen simulierten Betriebszyklus über der Zeit mit den anliegenden Eingangs- bzw. Ausgangssignalen an der Steuer-/Reglereinheit gemäß der Erfindung;
- Fig. 8: Bremsmomentenverlauf an der Hinterachse in Abhängigkeit vom Fahrgang und der Fahrgeschwindigkeit;
- Fig. 9: Verlauf des Retarderbremsmomentes in Abhängigkeit von Fahrgang und Motordrehzahl.

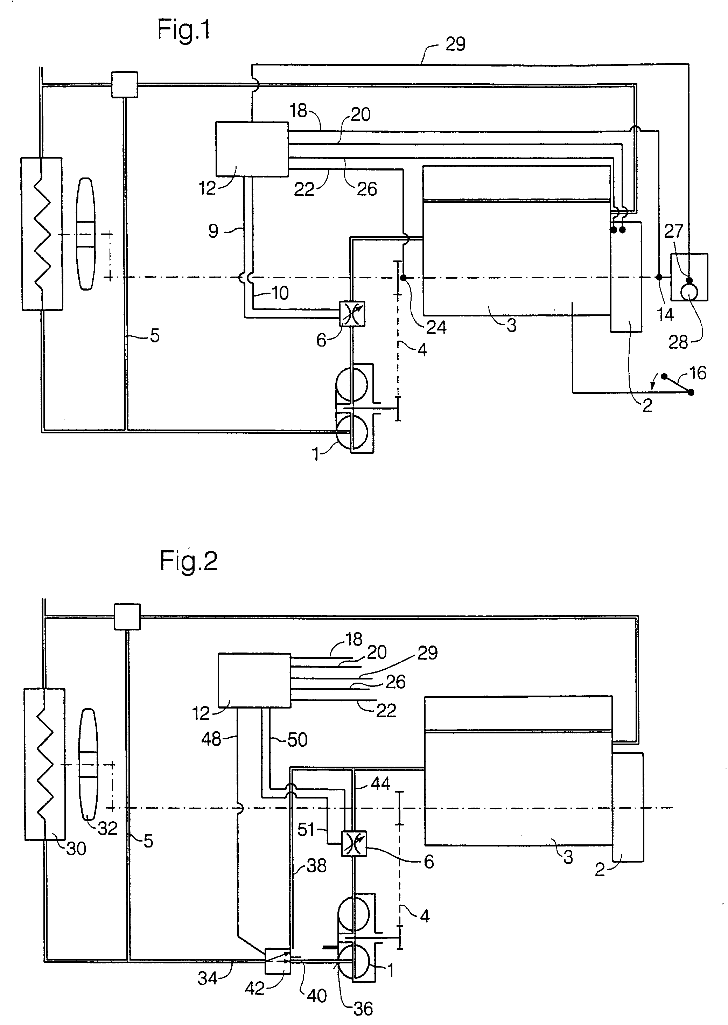

In Fig. 1 ist stellvertretend für ein Primärbremssystem ohne Beschränkung hierauf ein Primärretarder, wie er aus der deutschen Patentschrift 44 08 349 bekanntgeworden ist, deren Inhalt hiermit vollumfänglich in diese Anmeldung aufgenommen wird, mit der erfindungsgemäßen Steuer-/Reglereinheit dargestellt. Der Retarder 1 ist vor dem Getriebe 2 des Motors 3 angeordnet. Der Retarder 1 befindet sich mit dem Motor 3, insbesondere der Kurbelwelle in ständiger Triebverbindung. Im dargestellten Fall steht der Retarder über ein Vorgelege 4 in ständiger Drehverbindung. Dem Retarder 1 und dem Motor 3 ist ein gemeinsamer Kühlmittelkreislauf 5 zugeordnet. Das Kühlmittel des Kühlmittelkreislaufes 5 fungiert in der dargestellten Ausführungsform zugleich als Arbeitsmittel für den Retarder 1. Der Retarder ist für eine ständige Vollfüllung mit Arbeitsmittel ausgelegt. Aufgrund der Anordnung des Retarders 1 in Kraftflußrichtung vor dem Getriebe bleibt der Retarder in allen Betriebszuständen mit dem Motor gekoppelt, weshalb er auch als Pumpe zur Umwälzung für das Kühlmittel ausnutzbar ist. In Traktionsbetrieb, d.h. bei nichtbetätigtem Retarder, arbeitet dieser als Umwälzpumpe für das Kühlmittel im Kühlmittelkreislauf 5. Im Nicht-Bremsbetrieb weist das Ventil 6 einen großen freien Durchlaßquerschnitt auf, so daß das geförderte Kühlmittel unter geringem Gegendruck durch den Kühlmittelkreislauf gefördert wird.

Im Bremsbetrieb gibt das Ventil 6 nur einen geringen Durchlaßquerschnitt für das zu fördernde Kühlmittel frei. Auf diese Art und Weise ist es möglich, daß im Retarder ein Gegendruck aufgebaut wird und sich ein Bremsmoment entwickelt. Das Ventil 6 kann als stufenlos verstellbares Drosselventil ausgeführt sein, was eine stufenlose variable Einstellung des Bremsmomentes ermöglicht. Es besteht jedoch auch die Möglichkeit einer stufenweisen Änderung des Bremsmomentes durch ein entsprechend ansteuerbares Ventil.

Das stufenlos verstellbare Drossel- bzw. Proportionalventil 6 ist über Steuerleitungen 9, 10 mit der Steuer-/Reglereinheit 12, die vorzugsweise als Mikroprozessor ausgebildet ist, verbunden. Die Steuerleitungen 9, 10 dienen der Übermittlung von Steuersignalen zur stufenlosen Einstellung des Retarderbremsmomentes mittels des Proportionalventiles. Üblicherweise kann hierfür das Stromsignal der Leitungen 9, 10 verwendet werden.

Die Ansteuerung des Ventils 6 über die Leitungen 9, 10 durch die Steuer- /Reglereinheit 12 erfolgt in Abhängigkeit von den an der Steuer-/Reglereinheit anliegenden Meßsignalen.

In dem vorliegenden Ausführungsbeispiel wird über den ersten Sensor 14 ein Signal aufgenommen, das eine Fahrzeugbeschleunigung bzw. das "Gasgeben" anzeigt. Hierzu wird ein Meßsignal des Motormomentes aufgenommen, wobei ein Motormoment >0 für den Zustand "Gasgeben" steht und Mₘₒₜ = 0 für den anderen Betriebszustand. Wird über das Leistungsstellglied 16 die Kraftstoffzufuhr erhöht und "Gas gegeben" so liegt auf der Gasmeßleitung 18 eingangsseitig am Regler 12 ein EIN-Signal, in allen anderen Fällen ein AUS-Signal an.

Neben dem Meßsignal, das über das "Gasgeben" Auskunft gibt, werden zur Ansteuerung des Ventils 6 von der Steuer-/Reglereinheit 12 noch weitere Signale aufgenommen. Das zweite Meßsignal betrifft den Zustand der Kupplung, mit der der Antriebsstrang getrennt werden kann. Dieses Meßsignal wird am Kupplungsgetriebe 2 aufgenommen und über die Kupplungs-Zustandsmeßleitung 20 der Steuer-/Reglereinheit 12 zugeführt. Im eingekuppelten Zustand liegt auf der Meßleitung 20 ein AUS-Signal eingangsseitig an der Steuer-/Reglereinheit an, während im ausgekuppelten Zustand ein EIN-Signal der Steuer-/Reglereinheit 12 zugeführt wird.

Als drittes Meßsignal zur Ansteuerung des Ventils 6 über die Steuer-/Reglereinheit 12 wird diesem ein Meßsignal, das die aktuelle Motordrehzahl repräsentiert, zugeführt, die beispielsweise über den Sensor 24 oder eine Klemme der Lichtmaschine aufgenommen wird.

In einer ersten Ausführungsform der Erfindung ist vorgesehen, daß eine direkte Gangerkennung des Schaltgetriebes erfolgt, und ein Gangerkennungssignal an die Steuer-/Reglereinheit übermittelt wird.

In der in Fig. 1 und 2 dargestellten Ausführungsform ist jedoch eine direkte Gangerkennung der Schaltgänge nicht möglich. Der eingelegte Gang wird mit Hilfe mehrerer unabhängiger Meßsignale, die an die Steuer-/Reglereinheit übermittelt werden, erkannt.

Als Meßsignale hierfür werden die auf der Leitung 22 anliegenden aktuellen Motordrehzahlwerte, die über den Sensor 24 abgegriffen werden, sowie ein Meßsignal, das die momentan gefahrene Geschwindigkeit wiedergibt, verwandt.

Das Geschwindigkeitsmeßsignal kann an einer Radachse 28 mittels eines Geschwindigkeitssensors 27 abgegriffen werden, das über die Geschwindigkeitsmeßleitung 29 der Steuer-/Reglereinheit zugeführt wird.

Sind weitere fahrzeugtypische Werte, wie beispielsweise der Getriebetyp, die Reifengröße und die Achsübersetzung bekannt, so kann aus den Meßsignalen "Motordrehzahl" und "Geschwindigkeit des Fahrzeuges" der aktuelle Fahrgang mit Hilfe eines entsprechenden Rechenalgorithmus errechnet werden.

Die Kenntnis des Getriebetypes gibt beispielsweise Auskunft über die Übersetzungsverhältnisse der einzelnen Gänge.

Allerdings erlaubt die oben aufgezeigte Methode der Gangerkennung nur die Ermittlung von Schaltgängen. Der Leergang kann auf diese Art und Weise nicht erkannt werden.

Daher muß für diesen Fall als weiteres Meßsignal ein Leergangmeßsignal über Leitung 26, das mit einem Sensor am Getriebe abgegriffen wird, der Steuer- /Reglereinheit zugeführt werden.

Ist das direkte Abgreifen eines Leergangsignales nicht möglich, so kann das über Leitung 22 zugeführte Drehzahlmeßsignal dazu verwandt werden, zu verhindern, daß eine falsche Gangberechnung nach obiger Methode zu einem unerwünschten Retarderbremsmoment führt. Hierzu wird das Unterschreiten einer bestimmten Mindestdrehzahl dazu verwandt, daß die Steuer-/Reglereinheit das Proportionalventil in den AUS-Zustand versetzt, also eine Bremsmomentenreduzierung vorgenommen wird.

In Fig. 2 ist eine zweite Ausführungsform eines Retarders mit der erfindungsgemäßen Reglereinrichtung dargestellt.

Die Antriebseinheit aus Motor 3, Getriebe 2 und Retarder 1 ist im wesentlichen wie in Fig. 1 aufgebaut, weshalb für gleiche Elemente die gleichen Bezugszahlen verwendet werden. Der Retarder 1 steht in ständiger Drehverbindung, insbesondere mit der Kurbelwelle des Motors. Im dargestellten Fall wird dies über ein Vorgelege 4 realisiert. Im Kühlmittelkreislauf 5 ist ein Kühler 30 mit Ventilator 32 vorgesehen. In Abänderung zur Ausführungsform gemäß Fig. 1 wurde in der Ausführungsform gemäß Fig. 2 eine andere Ventilanordnung zur Einstellung der verschiedenen Grundbetriebsstufen des Retarders gewählt. Die Leitung 34 vom Kühleraustritt zum Flüssigkeitseintritt am Retarder verzweigt sich in Punkt 40 in eine Zufuhrleitung 36 zum Retarder und eine Bypassleitung 38. Im Punkt 40 ist ein Umschaltventil 42 angeordnet, das vorteilhafterweise als 2-Wege-Ventil ausgeführt ist. Je nach Grundbetriebszustand wird das Ventil so geschaltet, daß die Kühlerflüssigkeit durch die Bypassleitung am Retarder vorbei- oder durch diesen hindurchfließt. Die Bypassleitung ist immer dann geöffnet, wenn der Nicht-Bremsbetrieb geschaltet ist. In die Leitung 44 vom Retarder zum Kühlereintritt in die Antriebsmaschine 3 ist ein Regelventil 6 eingebracht, das die stufenlose Einstellung des Retarderbremsmomentes im Bremsbetrieb ermöglicht. Dieses Regelventil ist vorteilhafterweise als Proportionalventil ausgebildet, mit dem der Füllungsgrad des Retarders und damit das Bremsmoment stufenlos eingestellt werden kann.

Sowohl das Umschaltventil 42 als auch das Proportionalventil 6 sind mit der Steuer-/Reglereinheit 12 über Steuerleitungen 48, 50, 51 ausgangsseitig verbunden. Eingangsseitig werden der Steuer-/Reglereinheit 12 wie in Fig. 1 im vorliegenden Ausführungsbeispiel insgesamt fünf Meßsignale über Steuerleitungen zugeführt. Es sind dies das Meßsignal über den Gaszustand auf der Meßleitung 18, das Kupplungszustandsmeßsignal über die Meßleitung 20, das Motordrehzahlmeßsignal über die Meßleitung 22, das Geschwindigkeits-Istsignal über Meßleitung 29 und das Leergangerkennungssignal auf der Meßleitung 26.

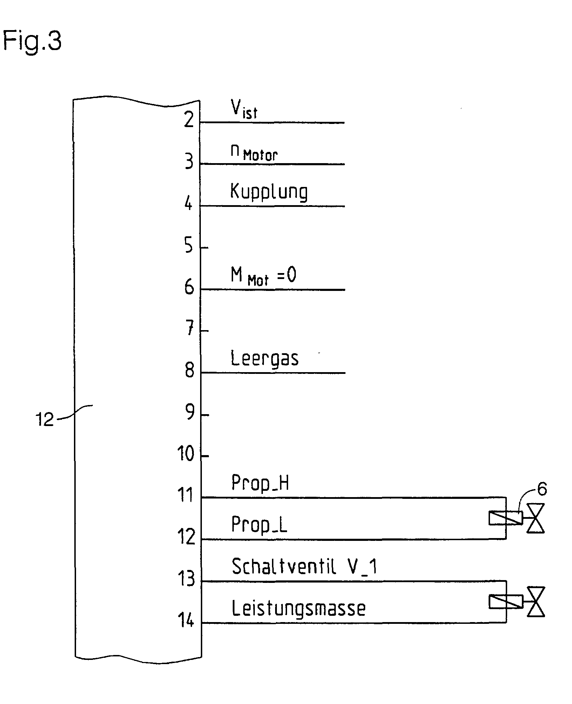

In Fig. 3 ist beispielhaft die Belegung der einzelnen Anschlüsse der Steuer- /Reglereinheit 12, die in vorliegendem Falle von Relevanz sind, dargestellt. Wie aus Fig. 3 zu ersehen, wird der als Mikroprozessor ausgebildeten Steuer- /Reglereinheit 12 eingangsseitig die einzelnen Meßsignale, wie Gaszustandsmeßsignal bzw. Lastzustandsmeßsignal, Kupplungszustandsmeßsignal und Drehzahlmeßsignal zugeführt.

Ausgangsseitig sind die Anschlüsse 11 und 12 mit dem in vorliegender Ausführungsform als Proportionalventil 6 ausgebildeten Regelventil über die Leitung Prop-H und Prop-L verbunden.

Nachfolgend wird stellvertretend für ein beliebig gestaltetes Regelventil immer ein Proportionalventil genannt, ohne daß dies eine Beschränkung darstellen soll.

Die Anschlüsse 13, 14 sind über die Leitungen Schaltventil-1 und Leitungsmasse mit dem bei der Bypassanordnung gemäß Fig. 2 optional vorgesehenen Umschaltventil 42 verbunden.

Eine Ansteuerung des Proportionalventiles entsprechend der vorgenommenen Einstellung des Bremsmomentes z.B. mit Hilfe eines Fahrschalters, der in verschiedene Stellungen gebracht wird, um das gewünschte Bremsmoment stufenlos einzustellen, erfolgt in vorliegendem Ausführungsbeispiel über die Steuerleitungen Prop-H und Prop-L.

Bei dem dargestellten Ventil 6 kann der Strömungskanal des Ventils entsprechend der vorgegebenen Bremsstufe eingestellt werden und zwar mit Hilfe der auf den Leitungen Prop-H bzw. Prop-L anliegenden Signale.

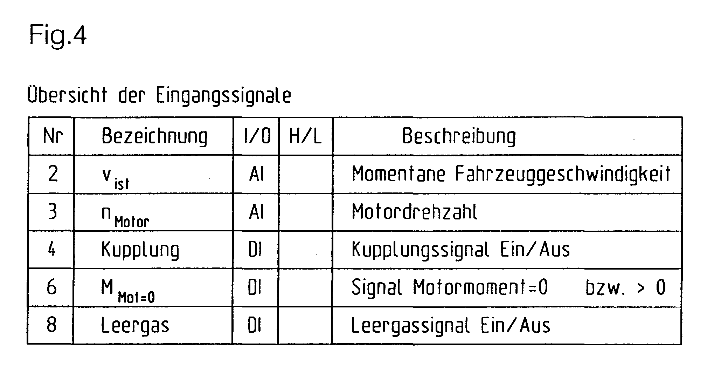

Fig. 4 zeigt eine Übersicht der eingangsseitigen Signale, die bspw. von einem CAN-Bus abgerufen und in den Mikroprozessor 12 eingelesen werden können. Das Signal Nr. 2 kann ein Analogmeßsignal sein und gibt die momentane Geschwindigkeit des Fahrzeuges wieder. Das Signal Nr. 3 für die Motordrehzahl kann beispielsweise ein Frequenzsignal sein. Das Signal Nr. 4 für den Kupplungszustand ist vorzugsweise ein Digitalsignal, das den Kupplungszustand EIN bzw. AUS beschreibt. Als Meßsignal für den Betriebszustand "Gasgeben" bzw. der Fahrzeugbeschleunigung kann, wie zuvor beschrieben, ein indirekt aus dem Motormoment ermitteltes Meßsignal verwendet werden. Dabei steht ein Motormoment >0 für den Zustand "Gasgeben" und ein Motormoment ungefähr 0 für die übrigen Betriebszustände. Es ist aber auch möglich, in einer alternativen Ausführungsform die Gaspedalstellung selbst festzustellen und hieraus ein Meßsignal abzuleiten.

Das optionale Leergangsignal Nr. 8 gibt Auskunft darüber, ober der Leergang eingelegt ist oder nicht.

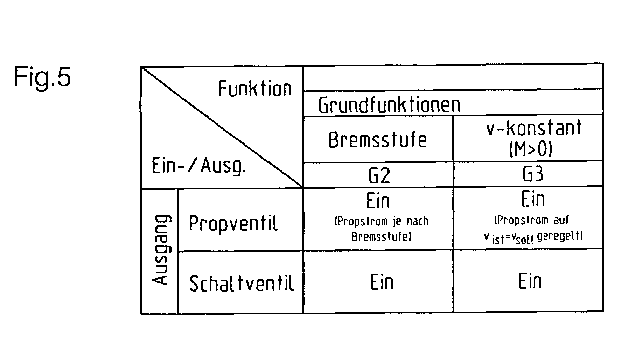

In Fig. 5 ist in einer Matrix zwei die Retardergrundfunktion "Bremsstufe" mit einer beispielhaften Belegung der Ausgangsseite der Steuer-/Reglereinheit dargestellt.

Die Funktion Bremsstufe (G2) erzeugt je nach Stellung von beispielsweise Handbremshebel bzw. Fußpedal ein in einem Parametersatz festgelegtes Bremsmoment (MRetₘᵢₙ < MRet_{RSS1} < ... < MRet_{RSSn} < MRetₘₐₓ).

Bei der Grundfunktion v-konstant (G3) liegt eine Kopplung bzw. Anschaltung an die Motorelektronik vor, wobei das Bremsmoment >0 ist. In der Grundfunktion G3 wird das Proportionalventil in den EIN-Zustand versetzt und aufgrund der Geschwindigkeitsvorgabe der Proportionalstrom derart geregelt, daß Vᵢₛₜ = vₛₒₗₗ gilt.

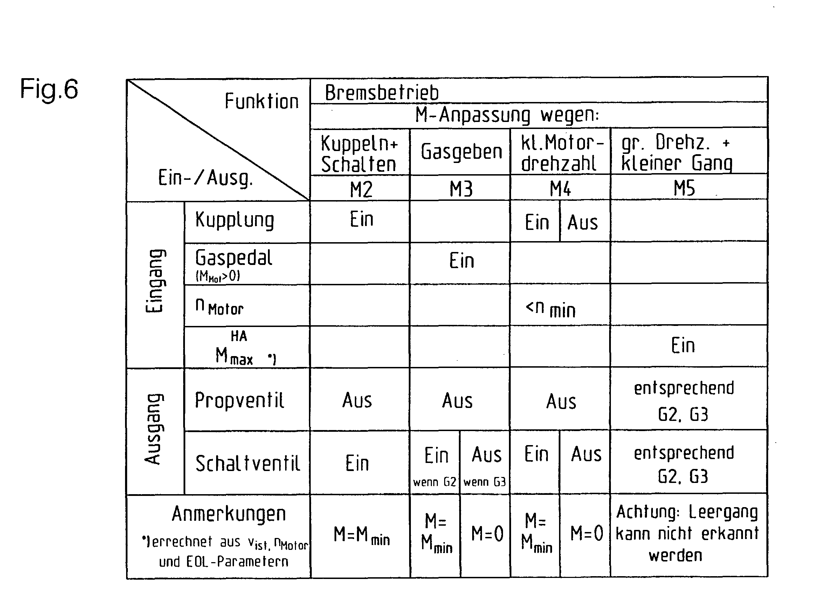

In Abhängigkeit von den Eingangs-Meßsignalen, von denen vier für den Bremsbetrieb (Bremsstufe und v-konstant) in Fig. 6 in den ersten vier Spalten der Tabelle aufgeführt sind, werden bei bestimmten Betriebssituationen die Stellglieder, die im Falle einer Anordnung gemäß Fig. 1 lediglich ein Proportionalventil ist und im Falle einer Anordnung gemäß Fig. 2 zusätzlich ein Schaltventil zur Schaltung der Bypassleitung umfaßt, erfindungsgemäß wie gezeigt von der Steuer-/Reglereinheit angesteuert.

Die Matrix gemäß Fig. 6 gibt beispielhafte Eingangs- und Ausgangsbelegungen des Mikroprozessors der Steuer-/Reglereinheit für verschiedene Betriebssituationen wieder.

In Spalte 2 ist eine Bremsmomentenanpassung in Abhängigkeit vom Kupplungszustand dargestellt. Die Anpassung erfolgt, wenn das Kupplungspedal gedrückt wird, d.h. der Antrieb vom Abtrieb getrennt wird. In diesem Fall liegt am Ausgang zum Proportionalventil ein Signale an, so daß das Proportionalventil in den AUS-Zustand versetzt wird, das bedeutet am Retarder ein minimales Bremsmoment aufgebaut wird.

Der in Spalte M3 gezeigte Fall einer Momentenanpassung ergibt sich, wenn dem Verbrennungsmotor Kraftstoff zugeführt wird, d.h. das Leistungsstellglied verstellt wird, also Gas gegeben, d. h. das Fahrpedal betätigt wird. In einem solchen Fall soll der Motor nicht gegen den Retarder arbeiten. Als Signal für das Gasgeben wird das Motormoment abgegriffen, das dann >0 ist. Ist dies der Fall, so wird das Meßsignal für den Zustand des Leistungsstellgliedes auf EIN gesetzt. Liegt ein solches Signal für das Leistungsstellglied am Eingang des Mikroprozessors 12 an, so wird ausgangsseitig des Mikroprozessors die Leitung zum Proportionalventil in den AUS-Zustand gebracht. Liegt eine Ausführungsform gemäß Fig. 1 mit nur einem Proportionalventil als Stellglied vor, so liegt das minimale Retarder-Bremsmoment im Falle des AUS-Zustandes des Proportionalventiles an. In einer Ausführungsform gemäß Fig. 2 mit zusätzlichem Schaltventil ergeben sich zwei Möglichkeiten der Ansteuerung für den Fall einer Momentenanpassung beim "Gasgeben". Im Grundbetriebszustand G2, der einer fest eingestellten Bremsstufe entspricht, ist das Schaltventil im EIN-Zustand, was bedeutet, daß der Bypass geschlossen ist. Für diesen Betriebszustand ergibt sich, daß der Retarder mit einem minimalen Retarderbremsmoment MRetₘᵢₙ betrieben wird. Im alternativen Fall der Grundbetriebsfunktion G3, die einer konstanten Geschwindigkeit entspricht, wird das Schaltventil in den AUS-Zustand gesetzt, was bedeutet, daß das Umschaltventil den Bypass freigibt. Somit ist das Bremsmoment gegen den Motor ungefähr bei Null. Je nach Stellung des Umschaltventils kann also ein unterschiedliches vorgegebenes reduziertes Bremsmoment erreicht werden.

Der dritte Betriebszustand (M4), der im Bremsbetrieb eine Momentenanpassung erfordert, liegt dann vor, wenn der Motor eine bestimmte Drehzahl nₘᵢₙ unterschreitet. Dies kann sowohl bei ein- als auch ausgeschalteter Kupplung der Fall sein. Unterschreitet der Motor eine bestimmte Mindestdrehzahl, so veranlaßt die Steuer-/Reglereinheit, daß ausgangsseitig das Proportionalventil in den AUS-Zustand versetzt bzw. dort gehalten wird. Ist zusätzlich zum Proportionalventil ein Schaltventil vorgesehen, so ist es möglich, zwei Zustände zu realisieren, einmal mit ausgeschaltetem Bypass, was zur Folge hat, daß das Retarderbremsmoment dem minimalen Retarderbremsmoment entspricht, oder mit eingeschaltetem Bypass, wodurch das Bremsmoment, das gegen den Motor arbeitet, auf annähernd Null herabgesetzt werden kann .

Als vierter Betriebszustand (M5), der eine Momentenanpassung erfordert, wird der erfindungsgemäße Fall betrachtet, daß bei hoher Drehzahl in einem kleinen Gang ein Bremsmoment bei fest eingestellter Bremsstufe (Grundfunktion G2) oder "v-konstant" (Grundfunktion G3) vom Retarder erzeugt wird, das größer ist als das zulässige Bremsmoment MGW_{max R} bzw. MGW_{maxHA}, das an den Rädern bzw. einer Achse anliegen darf. Dieses Moment ist von verschiedenen Fahrzeugparametern abhängig. So ist das maximal zulässige Bremsmoment beispielsweise an der Hinterachse u.a. von unterschiedlicher Last abhängig.

In der vorliegenden Ausführungsform, bei der keine direkte Gangerkennung möglich ist, wird mittels von Sensoren die aktuelle Geschwindigkeit Vᵢₛₜ erfaßt sowie die Motordrehzahl. Mit Hilfe dieser Meßgrößen sowie weiterer fest vorgegebener Parameter für das Fahrzeug, wie Getriebetyp, Achsübersetzung und Antriebsart, kann der jeweilige Fahrgang mit Hilfe eines Rechenalgorithmus bestimmt werden.

Überschreitet in dem durch den Rechenalgorithmus bestimmten Fahrgang das aufgrund der hohen Drehzahl des Motors (d.h. großen Wirkungsgrad des Retarders) und der hohen Momentenübersetzung bei maximalem Retarderbremsmoment MRetₘₐₓ mögliche Bremsmoment an den Rädern bzw. der Achse MGW_{maxR} das zulässige Bremsmoment MGW_{maxR} bzw. MGW_{maxHA} an den Rädern bzw. der Achse, so wird gemäß Spalte M5 das Bremsmoment des Retarders reduziert, so daß sich maximal das an den Rädern zulässige Bremsmoment MGW_{maxR} bzw. MGW_{maxHA} ergibt.

Dies erfolgt dadurch, daß ein Signal MGW_{maxHA}, das vorzugsweise ein Analogsignal ist, eingangsseitig erzeugt wird, das ausgangsseitig dazu führt, daß das Proportional- und das Umschaltventil gemäß den Grundbetriebszuständen G2 und G3 derart angesteuert werden, daß der in diesem Gang das zulässige Bremsmoment am Retarder eingestellt wird.

Denkbar wäre in diesem Zusammenhang, daß bei einem Drosselventil die maximal mögliche Querschnittsverengung und damit das in diesem Gang maximal erzeugbare Retarderbremsmoment MRetₘₐₓ (G) = (MRetₘₐₓ * G%)/100% eingestellt wird oder der maximale Proportionalstrom an einem Proportionalventil. Das im jeweiligen Gang zulässige maximale Retarderbremsmoment MRetₘₐₓ (G) wird vorwiegend als Bruchteil des im höchsten Fahrgang erzeugten maximalen Retarderbremsmomentes MRetₘₐₓ angegeben.

Falls der Leergang nicht erkannt werden kann, würde alleine eine Regelung, wie zuvor beschrieben, in einem solchen Fall zu fehlerhaften Bremsmomentenreduzierungen führen. Dies kann dadurch vermieden werden, daß bei Unterschreiten der Drehzahl nₘᵢₙ (s. auch Spalte M4) ein Signal zur sofortigen Bremsmomentenreduzierung auf MRetₘᵢₙ angelegt wird was einen Stop der Motorabbremsung, wie zuvor dargestellt, zur Folge hat.

Bei dem oben beschriebenen Regelungsverfahren ist eine fehlerhafte Gangerkennung aufgrund der immer erfolgenden Bremsmomentenreduzierung auf MRetₘᵢₙ bei eingelegtem Leergang weitgehend unschädlich.

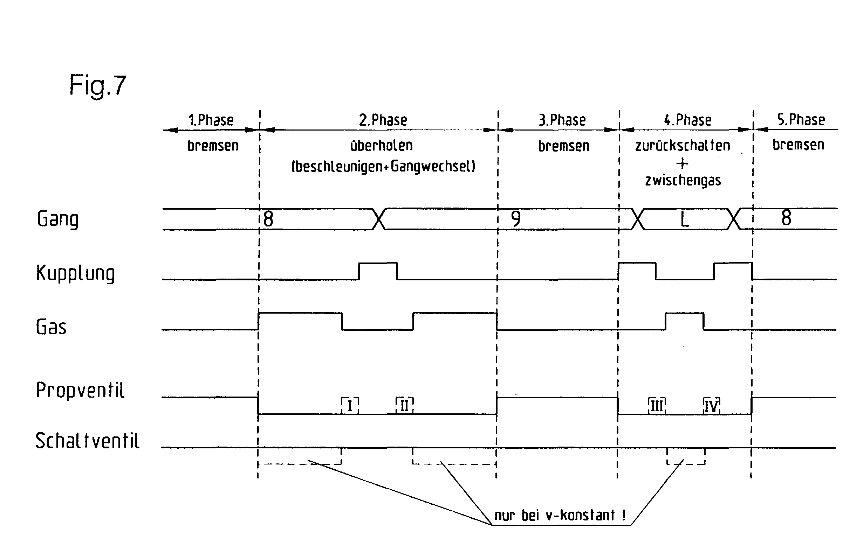

In Fig. 7 sind beispielhaft die Eingangssignale für Kupplung und Gas sowie die Ausgangssignale für das Proportionalventil und das Schaltventil, die an den Ein- bzw. Ausgängen der als Mikroprozessor ausgebildeten Steuer-/Reglereinheit anliegen, in Abhängigkeit von verschiedenen Betriebssituationen über der Zeit dargestellt.

In Fig. 7 entspricht der EIN-Zustand einer logischen EINS und der AUS-Zustand einer logische Null. Für den Fachmann ist es selbstverständlich, daß er dem EIN- bzw. AUS-Zustand auch mit anderen Signalen belegen kann.

Fig. 7 zeigt die verschiedenen möglichen Betriebssituationen, die bei einer Bergabfahrt im Retarderbetrieb auftreten können. Hierbei werden sowohl die Grundbetriebsarten einer fest voreingestellten Bremsstufe G2 als auch einer konstanten Geschwindigkeit G3 dargestellt.

In einer ersten Phase der Betriebssimulation ist der achte Fahrgang eingelegt. Die Fahrsituation ist der Bremsbetrieb mit dem Retarder. In diesem Zeitraum ist der Antriebsstrang mit dem Abtriebsstrang gekoppelt, folglich ist das Signal für den Kupplungszustand eine logische NULL. Da im Bremsbetrieb kein Gas gegeben wird, ist auch das Meßsignal für den Zustand des Leistungsstellgliedes, im vorliegenden Fall des Gaspedales, auf einer logischen NULL.

Ausgangsseitig liegt am Proportionalventil eine logische EINS an, d.h. das Proportionalventil ist eingeschaltet bzw. im EIN-Zustand. Für eine fest voreingestellte Bremsstufe wird dann ein bestimmter Proportionalstrom je nach Bremsstufe eingestellt. Für den Fall einer kostantgehaltenen Geschwindigkeit wird über den Mikroprozessor 12 der Proportionalstrom des Proportionalventils immer derart geregelt, daß Vᵢₛₜ = Vₛₒₗₗ ist. Das Signal für das Schaltventil liegt auf einer logischen EINS, d.h. der Bypass ist nicht aktiv.

Wird nun aus der Bremssituation das Fahrzeug beschleunigt und der Gang gewechselt, so ergeben sich die in Fig. 7 eingezeichneten Eingangs- und Ausgangssignale der zweiten Phase.

Solange der Gang eingelegt ist, liegt das Signal für den Kupplungszustand auf einer logischen NULL. Wird die Kupplung betätigt, so springt das Signal für den Kupplungszustand auf eine logische EINS. Für die Zeitdauer, in der das Kupplungssignal auf einer logischen EINS liegt, ist das Proportionalventil gemäß der in Fig. 5 dargestellten Eingangs-Ausgangsmatrix in Abhängigkeit von der Betriebssituation, wie in Spalte M2 dargestellt, ausgeschaltet, d.h. es liegt auf einer logischen NULL.

Wird, wie in Fig. 7 dargestellt, während des Beschleunigungsvorganges bis zum Zeitpunkt des Schaltens das Gas betätigt, so wird an dem Mikroprozessor für den Gaszustand eine logische EINS angelegt, was gemäß der Matrix nach Fig. 5 unter dem Betriebszustand M3 dazu führt, daß für diese Zeitdauer am Proportionalventilausgang eine logische NULL anliegt, d.h. es liegt eine Bremsmomentenreduzierung für diese Zeitdauer vor.

Das Signal des Schaltventiles ist für den Bremszustand immer auf einer logischen EINS, d.h. die Bypassleitung ist gesperrt, wie die durchgezogene Linie zeigt. Allerdings gilt dies nur für den Grundbetriebszustand 2 einer fest vorgegebenen Bremsstufe. Im Falle der Grundbetriebsart 3, d.h. einer konstanten Geschwindigkeit, ist das Schaltventil auf eine logische NULL für den Zeitpunkt des Gasgebens gesetzt, d.h. der Bypass ist geöffnet.

Wie dem zeitlichen Verlauf des Signales für das Proportionalventil zu entnehmen ist, ergibt sich eine logische EINS und damit ein eingeschaltetes Proportionalventil, was dem vollen Retarderbremsmoment entspricht, für die Zeitdauer, in der kein Gas gegeben wird, aber das Kupplungspedal noch nicht durchgetreten ist. Dieser Zustand ist gestrichelt in den zeitlichen Verlauf des Proportionalventilsignales in der zweiten Phase eingezeichnet und mit den Ziffern lund II bezeichnet. Ein Retarderbremsmoment, das in diesem Zeitpunkt gegen den Motor arbeitet, ist unerwünscht. Um für die gesamte Zeitdauer des Schaltvorganges, d.h. zwischen dem Wegnehmen der Gaszufuhr vor dem Kuppeln und Aufnehmen der Gaszufuhr nach dem Kuppeln, also während des gesamten Schaltvorganges eine Bremsmomentenreduzierung vorzunehmen, ist vorgesehen, ein Verzögerungsglied oder Rampe einzubauen, das sicherstellt, daß keine schnellen Retardereinschaltzeiten vorliegen. Ein Einschalten des Retarders erfolgt gegenüber dem Meßsignal zeitlich versetzt. Erfolgt die Einschaltung des Retarders nach einer Änderung beispielsweise des Gassignals von einer logischen EINS auf eine logische NULL nur verzögert, so kann in der dargestellten zweiten Phase die Einschaltung des Proportionalventiles im für die mit I bezeichnete Zeitdauer verhindert werden.

Ebenso ist es möglich, bei einer Änderung des Kupplungssignals von einer logischen EINS auf eine logische NULL den Retarder nur verzögert einzuschalten. Hierdurch kann das unerwünschte Signal für die mit II bezeichnete Zeitdauer in der zweiten Phase vermieden werden. Durch Zeitverzögerungsglieder ist es somit möglich, während des gesamten Gangwechsels das Retarderbremsmoment minimal zu halten bzw. die Bremsmomentenreduzierung sicherzustellen.

Die dritte Phase des dargestellten Fahrzyklus stellt wieder eine Bremssituation dar. Da beim Bremsen kein Gas mehr gegeben wird, ändert sich das Meßsignal für den Zustand des Gaspedals von einer logischen EINS auf eine logische NULL. Entsprechend der Zuordnung von Ein- und Ausgangsfunktionen hat dies im Bremsbetrieb zur Folge, daß das Proportionalventil vom AUS- in den EIN-Zustand wechselt und somit die gewünschte Bremsleistung zur Verfügung steht. Für den Grundzustand G3, der eine konstante Geschwindigkeit vorsieht, wird durch diese Änderung an der Steuer-Regeleinheit 18 der Eingangsseite ausgangsseitig das Schaltventil vom Bypass auf den Retarder umgeschaltet, wie strichpunktiert in Fig. 7 für die zeitliche Änderung dieser Größe eingezeichnet.

An die dritte Phase, die einen Bremszustand simuliert, schließt sich eine vierte Phase an, die einen Fahrzustand repräsentiert, bei dem von einem höheren Gang in einen niedrigeren Gang zurückgeschaltet wird. Beim Zurückschalten soll das Einkuppeln durch kurzes Zwischengasgeben unterstützt werden.

Dies bedeutet, daß zunächst die Kupplung gedrückt wird. Hierdurch ändert sich das eingangsseitige Kupplungszustandssignal von einer logischen NULL auf eine logische EINS, was gemäß dem Schema nach Fig. 5 zu einer Momentenanpassung gemäß Fall M2 führt. Das bedeutet, ausgangsseitig liegt auf der Steuerleitung für das Proportionalventil eine logische NULL an, was dazu führt, daß das Proportionalventil in den AUS-Zustand versetzt wird, d.h. es liegt das minimale Retarderbremsmoment vor. Wird nun Zwischengas gegeben, so muß erneut eingekuppelt werden, und zwar in den Leergang L. Durch das erneute Einkuppeln ändert sich das eingangsseitige Kupplungssignal von einer logischen EINS auf eine logische NULL, was zur Folge hat, daß die Momentenreduzierung nicht mehr wirksam ist, und ausgangsseitig für das Proportionalventil eine logische EINS anliegt, d.h. dieses eingeschaltet wird und somit unerwünschterweise ein Bremsmoment vorliegt.

Dieses unerwünschte Bremsmoment, das im Proportionalventilsignal strichpunktiert dargestellt ist und mit der Bezugsziffer III bezeichnet wurde, wird bis zu dem Zeitpunkt aufgebaut, zu dem Gas gegeben wird. Durch das Gasgeben wird die in Fig. 5 dargestellte Momentenanpassung ausgelöst, d.h. das eingangsseitige auf eine logische EINS gesetzte Gaszustandsmeßsignal führt dazu, daß der Ausgang für das Proportionalventil auf eine logische NULL gesetzt wird und damit das minimale Bremsmoment des Retarders MRetₘᵢₙ anliegt, wenn mit einer festen Bremsstufe G2 gefahren wird. Der unerwünschte Aufbau eines Retarderbremsmomentes MRet für die Zeitdauer zwischen Einkuppeln und erneutem Gasgeben kann auf verschiedene Art und Weise vermieden werden. Eine erste Lösungsmöglichkeit besteht wie schon bei der zweiten Phase darin, eine Zeitverzögerung für das Einschalten des Retarders mit einer Rampe vorzusehen.

Alternativ hierzu ist es möglich, wenn der Leergang erkannt werden kann und an den Mikroprozessor als Eingangsgröße übermittelt wird, eine Steuerung des Proportionalventils ausgangsseitig dahingehend vorzusehen, daß für die gesamte Dauer, in der das Leergangsignal am Mikroprozessor anliegt, das Proportionalventil-Ausgangssignal auf eine logische NULL gesetzt wird, das Proportionalventil also ausgeschaltet und damit das Retarderbremsmoment auf das minimale Bremsmoment reduziert wird.

Falls eine direkte Leergangerkennung nicht möglich ist, so kann in einer weiteren Ausführungsform das Unterschreiten einer vorgegebenen Motordrehzahl gemäß Fig. 6, Spalte M4 unabhängig vom Kupplungszustand eingangsseitig dazu verwendet werden, das Proportionalventil-Ausgangssignal auf eine logische NULL zu setzen und damit eine sofortige Bremsmomentenreduzierung zu induziieren, wodurch ein Arbeiten gegen den Motor verhindert wird.

Beim Herunterschalten von dem höheren (9. Gang) in den niedrigeren Gang (8. Gang), wie in der dritten Phase dargestellt, wird erfindungsgemäß dafür Sorge getragen, daß das maximal an den Rädern bzw. an einer Achse zulässige Bremsmoment MGW_{maxR} bzw. MGW_{maxHA} in dem niedrigeren Gang (8. Gang) nicht überschritten wird.

Hierzu wird aufgrund der aktuellen Motordrehzahl n_{Mot}, der aufgenommenen Fahrzeuggeschwindigkeit vᵢₛₜ sowie der für Getriebetyp, Antriebsart und Achsübersetzung sowie gegebenenfalls weiterer für das Fahrzeug charakteristischer Werte der Fahrgang bestimmt. Bei dem dargestellten Wechsel vom 9. Fahrgang in den 8. Fahrgang erfolgt das Zurückschalten unter Zwischengasgeben im Leergang.

Obwohl für den Leergang kein eigenes Signal anliegt, wird für den Zeitraum des Schaltens auf MRetₘᵢₙ wie zuvor beschrieben herabgeregelt. Bei geschaltetem Bypass ist auch eine Herabregelung auf ungefähr Null möglich, wie zuvor beschrieben.

Ein Herabregeln auf MGW_{maxR} bzw. MGW_{maxHA} findet nur statt, wenn das Proportionalventil sich im EIN-Zustand befindet.

Wie aus der vierten Phase des weiteren im zeitlichen Verlauf zu ersehen, wird, wenn keine der vorgenannten Vorkehrungen getroffen wurde, nach Abregeln der Gaszufuhr und vor erneutem Einkuppeln wiederum ein unerwünschtes Bremsmoment aufgebaut, indem das Proportionalventilsignal in den EIN-Zustand gesetzt wird und damit das Proportionalventil eingeschaltet wird. Dieser ungewollte Zustand ist im zeitlichen Verlauf für das Proportionalventilsignal strichpunktiert dargestellt und mit der Bezugsziffer IV bezeichnet. Wie beim unerwünschten Signal III kann das Aufbauen eines Retarderbremsmomentes im Falle der Ziffer IV dadurch verhindert werden, daß mit einer Zeitverzögerung beim Einschalten des Retarders nach Abfallen des Zustandssignales für das Gas vom EIN-Zustand in den AUS-Zustand gearbeitet wird. Alternativ hierzu wäre die Leergangerkennung, oder aber eine Abregelung aufgrund zu geringer Motordrehzahl.

An die vierte Phase schließt sich in den simulierten Fahrzyklus zeitlich die fünfte Phase an, die wiederum eine Bremsphase in einer der Grundzustände des Bremsbetriebes, entweder fest eingelegte Bremsstufe oder V-konstant ist. Wie aus dem zeitlichen Verlauf für die Ausgangssignale für das Proportionalventil und das Schaltventil zu ersehen ist, liegt wie erwartet ein Bremsmoment vor.

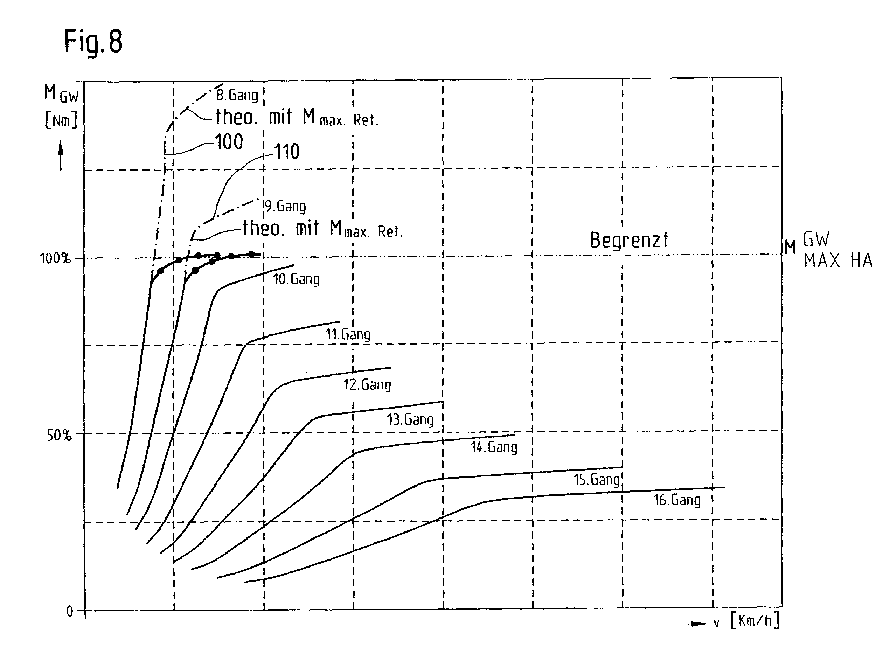

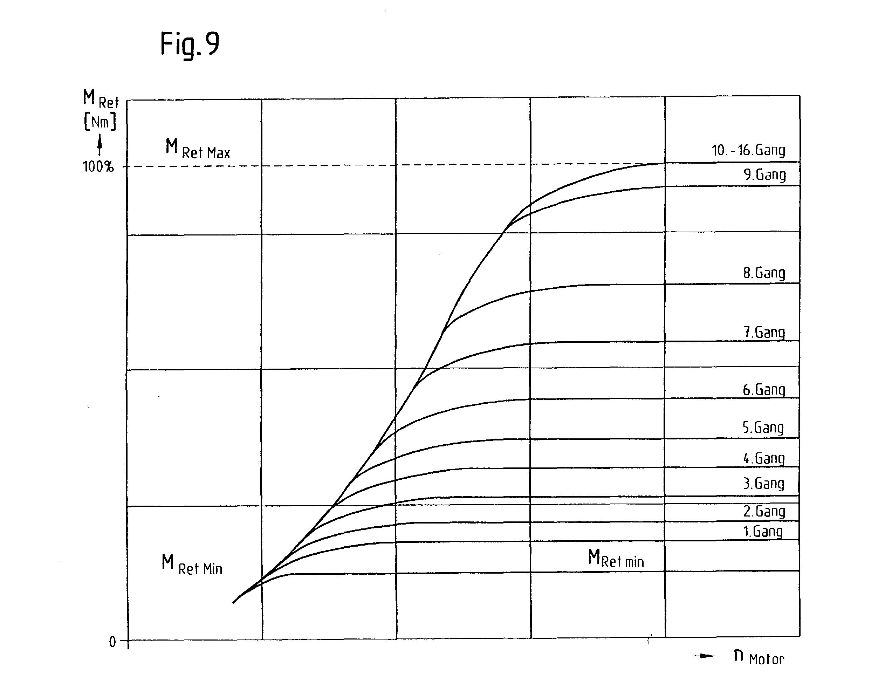

In Fig. 8 und 9 wird das erfindungsgemäße Herabregeln auf das an der Hinterachse bzw. den Hinterrädern maximal zulässige Bremsmoment MGW_{maxHA} ; MGW_{maxR} gezeigt, sowie der Verlauf des Retarderbremsmomentes MRet in Abhängigkeit von der Motordrehzahl.

In Fig. 8 ist der Verlauf des Bremsmomentes an der Hinterachse M_{GW} in Abhängigkeit vom Fahrgang (hier 8 - 16. Gang) sowie der Geschwindigkeit dargestellt.

Im 10 - 16. Gang wird das maximal zulässige Bremsmoment MGW_{maxHA}bei keiner Fahrgeschwindigkeit v [km/h] erreicht. Ein Herabregeln des Retarderbremsmomentes M_{Ret} ist nicht notwendig.

In Fig. 9 erreicht daher für den 10. - 16. Gang die Retarderbremsmomentenkennlinie für das Retarderbremsmoment M_{Ret}, in Abhängigkeit von der Motordrehzahl n_{Motor} den maximalen Wert MRetₘₐₓ, der gleich 100% gesetzt wird.

Für den 8. und 9. Gang ist in Fig. 8 der theoretische Verlauf des Bremsmomentes an der Hinterachse bzw. den Rädern M_{GW} dargestellt, wenn das Retarderbremsmoment nicht begrenzt wird. In diesem Fall würde das an der Hinterachse oder dem Hinterrad anliegende Bremsmoment M_{GW} ab gewissen Fahrgeschwindigkeitem das an der Hinterachse bzw. den Räden maximal zulässige Bremsmoment MGW_{maxHA} oder MGW_{maxR} übersteigen. Dies ist durch den strichpunktierten Verlauf 100, 110 der theoretischen Bremsmomentkennlinie M_{GW} in Fig. 8 für den 8. und 9. Fahrgang dargestellt.

Bei Begrenzung auf ein maximal zulässiges Bremsmoment MGW_{maxHA}, MGW_{maxR} muß das maximale Retarderbremsmoment im 9. Gang wie in Fig. 9 dargestellt beispielsweise auf ungefähr 85% von MRetₘₐₓ und im 8. Gang auf ungefähr 70% von MRetₘₐₓ herabgeregelt werden. Für die niedrigeren Gänge liegt das maximal zulässige Retarderbremsmoment entsprechend niedriger, bspw. im ersten Gang nur noch bei ungefähr 15% vom MRetₘₐₓ aufgrund der hohen Übersetzung des Getriebes.

Aufgrund der bei hohen Gängen nur noch sehr niedrigen maximal zulässigen Retarderbremsmomente MRetₘₐₓ kann in einer Ausführungsform der Erfindung vorgesehen sein, bei bestimmten, niedrigen Gängen eine Regelung auf ein bestimmtes individuell für diesen Fahrgang festgelegtes maximal zulässiges Retarderbremsmoment nicht vorzusehen. Das maximal zulässige Bremsmoment in diesen Fahrgängen wäre dann MRetₘᵢₙ oder Null, wenn der Retarder vollständig deaktiviert wird.

So wäre denkbar, auf eine Regelung dann zu verzichten, wenn das maximal in einem Fahrgang zulässige Retarderbremsmoment beispielsweise weniger als 25 % von MRetₘₐₓ beträgt, vorliegend also beispielsweise für den 2. und 1. Fahrgang. Es ergäbe sich dann:
- kein Herabregeln für 10. - 16. Gang, da MGW_{maxHA} nicht überschritten wird.
- Begrenzungen des Bremsmomentes des Primärbremssystems für den 3. - 9. Gang auf die im jeweiligen Gang maximal zulässigen Bremsmomente MRetₘₐₓ (Gang) im MGW_{maxHA} nicht zu überschreiten.
- Keine Regelung für den 1. und 2. Gang; d. h. MRetₘₐₓ (Gang) = MRetₘᵢₙ, was auch dadurch erreicht werden kann, daß der Retarder in diesen Gängen deaktiviert wird.
Würde bereits ab 50 % MRetₘₐₓ eine Regelung nicht mehr sinnvoll erscheinen, so könnte im vorliegenden Beispiel bereits ab dem 6. Fahrgang der Retarder deaktiviert werden.

Liegt kein regelbares Primärbremssystem, wie beispielsweise eine Motorklappenbremse vor, so kann in einer besonderen Ausführungsform der Erfindung folgendes Programm vorgesehen sein, um zu verhindern, daß das für einen Fahrgang maximal zulässige Bremsmoment an der Hinterachse (MGW_{maxHA}) überschritten wird:
- kein Herabregeln für 10. - 16. Gang, da MGW_{maxHA} nicht überschritten wird; volle Primärbremsleistung liegt an.
- Deaktivieren der Primärbremse, beispielsweise der Motorklappenbremse für 1. - 9. Gang; kein Primärbremsmoment wird zur Verfügung gestellt, da andernfalls MGW_{maxHA} überschritten würde.

Je nach den Anforderungen kann der Fachmann obiges Programm beliebig ausgestalten, ohne daß sich hierdurch das zuvor beispielhaft ausführlich beschriebene Regelungskonzept für einen hydrodynamischen Primärretarder bei anderen Primärbremssystemen prinzipiell ändert.

Bezugnehmend auf das beispielhaft beschriebene Regelungskonzept für einen hydrodynamischen Primärretarder sind sämtliche Retarderbremsmomentkurven, die sich bei Begrenzung auf MGW_{maxHA} bzw. MGW_{maxR} an der Hinterachse durch die erfindungsgemäße Regelung ergeben sind in Abhängigkeit von n_{Motor} in Fig. 9 dargestellt.

Der sich durch die zuvor beschriebene Regelung ergebende Verlauf des Bremsmomentes an der Hinterachse bzw. den Rädern M_{GW} ist beispielhaft für den 8. und 9. Gang in Fig. 8 dargestellt und zeigt abweichend von der theoretischen Kurve den dick eingezeichenten gepunkteten Verlauf ( ).

Wie aus der vorangegangenen Beschreibung zu entnehmen, ermöglicht vorliegende Erfindung es somit erstmals, daß bei einem Gangwechsel im Bremsbetrieb sichergestellt ist, daß das maximale Bremsmoment an einem Rad bzw. einer Achse MGW_{maxHA}, MGW_{maxR} nicht überschritten wird.

Obwohl die vorangegangene Beschreibung als Primärbremssystem beispielhaft auf einen Retarder, insbesondere einen hydrodynamischen Retarder, Bezug genommen hat, ist die Erfindung hierauf nicht beschränkt. Insbesondere soll der Begriff Retarder auch Retarder auf der Basis von Wirbelstrombremsen (siehe hierzu: Last Auto Omnibus 4/1991 aa0) umfassen. Des weiteren kann eine Ansteuerung sämtlicher bekannter regel- und nichtregelbarer Motorbremssysteme des Standes der Technik mit vorliegender Erfindung erfolgen.

## Patentansprüche

1. Elektronische Regeleinrichtung zur Einstellung des Bremsmomentes eines im Antriebsstrang eines Fahrzeuges angeordneten Primärretarders (1), umfassend
1.1 mindestens eine Steuer-/Reglereinheit (12);
1.2 Mittel zur Aufnahme von Meßsignalen zur Erfassung von Gangstellungen des Getriebes;
1.3 mindestens einem Stellglied (6) zur Einstellung des Bremsmomentes des Primärretarders
wobei die Regeleinrichtung (12) **dadurch gekennzeichnet ist, daß**
1.4 die Mittel zur Aufnahme von Meßsignalen zur Erfassung von Gangstellungen des Getriebes Mittel (26) zur Erfassung eines Leergangsignales umfassen und
1.5 die mindestens eine Steuer-/Reglereinheit (12) aufgrund der Meßsignale zur Erfassung der Gangstellungen das mindestens eine Stellglied (6) zur Einstellung des Bremsmomentes des Primärretarders (1) erart ansteuert, daß das Bremsmoment des Primärretarders ein für einen Fahrgang zulässiges maximales Bremsmoment nicht überschreitet.

2. Elektronische Regeleinrichtung nach Anspruch 1, **dadurch gekennzeichnet, daß** die Mittel zur Aufnahme von Meßsignalen zur Erfassung von Gangstellungen, Mittel zur Erfassung des aktuell eingelegten Fahrganges umfassen.

3. Elektronische Regeleinrichtung nach Anspruch 1 oder 2, **dadurch gekennzeichnet, daß** die Mittel zur Aufnahme von Meßsignalen zur Erfassung von Gangstellungen mindestens eines der folgenden Mittel umfaßt: Mittel zur Aufnahme von Meßsignalen zur Erfassung des Kupplungszustandes, Mittel zur Aufnahme von Meßsignalen zur Erfassung des Gaszustandes sowie Mittel zur Aufnahme von Meßsignalen zur Erfassung der Motordrehzahl umfassen.

4. Elektronische Regeleinrichtung nach Anspruch 3, **dadurch gekennzeichnet, daß** die Mittel zur Aufnahme von Meßsignalen zur Erfassung von Gangstellungen Mittel zur Aufnahme von Meßsignalen zur Erfassung der aktuellen Fahrtgeschwindigkeit umfassen.

5. Elektronische Regeleinrichtung nach Anspruch 3 und 4, **dadurch gekennzeichnet, daß** das aktuelle Fahrgangsignal nicht direkt erfaßt wird, sondern mittels eines Rechenalgorithmus aufgrund des Drehzahlmeßsignales und des Fahrgeschwindigkeitsmeßsignales sowie von Fahrzeugparametern durch die Steuer-/Reglereinheit bestimmt wird.

6. Elektronische Regeleinrichtung nach einem der Ansprüche 1 bis 5, **dadurch gekennzeichnet, daß** die Steuer-/Reglereinheit das mindestens eine Stellglied aufgrund des Fahrgangsignales für die Dauer, in der dieser Fahrgang eingelegt ist, derart ansteuert, daß das Bremsmoment des Primärretarders höchstens ein Bremsmoment annehmen kann, das dem maximal zulässigen Bremsmoment in diesem Fahrgang entspricht.

7. Elektronische Regeleinrichtung nach einem der Ansprüche 1 bis 6, **dadurch gekennzeichnet, daß** die Steuer-/Reglereinheit aufgrund des Leergangsignales das mindestens eine Stellglied zur Einstellung des Bremsmomentes des Primärretarders derart ansteuert, daß das Bremsmoment für die Zeitdauer, in der der Leergang eingelegt ist, einem vorgegebenen, reduzierten Bremsmoment entspricht.

8. Elektronische Regeleinrichtung nach einem der Ansprüche 1 bis 8, **dadurch gekennzeichnet, daß** das mindestens eine Stellglied zur Einstellung des Bremsmomentes des Primärbremssystems ein Regelventil umfaßt.

9. Elektronische Regeleinrichtung nach Anspruch 8, **dadurch gekennzeichnet, daß** das mindestens eine Stellglied zur Einstellung des Bremsmomentes des Primärbremssystems des weiteren ein Umschaltventil umfaßt.

10. Verfahren zur Einstellung des Bremsmomentes eines im Antriebsstrang eines Fahrzeuges angeordneten Primärretarders, umfassend die folgenden Schritte:
10.1 es wird anhand von Meßsignalen eine Gangstellung in einem Fahrzeug erfaßt;
10.2 mindestens ein Stellglied zur Einstellung des Bremsmomentes des Primärretarders wird in Abhängigkeit von den Meßsignalen betätigt; wobei das Verfahren **dadurch gekennzeichnet ist, daß**
10.3 die Meßsignale des weiteren ein Meßsignal umfassen, das den Leergangzustand angibt, und daß
10.4 das mindestens eine Stellglied zur Einstellung des Bremsmomentes des Primärretarders durch mindestens eine Steuer-/Reglereinheit aufgrund der gemäß Schritt 11.1 aufgenommenen Meßsignale derart angesteuert wird, daß das Bremsmoment des Primärbremssystems das für einen Fahrgang zulässige maximale Bremsmoment nicht überschreitet.

11. Verfahren nach Anspruch 10, **dadurch gekennzeichnet, daß** die Meßsignale mindestens eines der folgenden Meßsignale umfassen:
ein erstes Meßsignal, das den Fahrgang angibt;
ein zweites Meßsignal, das den Kupplungszustand angibt, ein drittes Meßsignal, das den Gaszustand angibt sowie ein viertes Meßsignal, das die Motordrehzahl angibt.

12. Verfahren nach einem der Anspruche 10 oder 11, **dadurch gekennzeichnet, daß**
das Fahrgangsignal mittels eines Rechenalgorithmus aufgrund des Drehzahlmeßsignales und des Fahrgeschwindigkeitsmeßsignales sowie von Fahrzeugparametern durch die Steuer-/Reglereinheit bestimmt wird.

## Claims

1. An electronic controlling device for setting the breaking torque of a primary retarder (1) disposed in the drive train of a vehicle, comprising
1.1 at least one open-loop/closed-loop control unit (12);
1.2 means for receiving measuring signals for detecting the gear positions of the gear;
1.3 at least one actuator (6) for setting the brake torque of the primary retarder, with the controlling device (12) being **characterized in that**
1.4 the means for receiving measuring signals in order to detect the gear positions of the gear comprise means (26) for detecting an idle gear signal and the at least one open-loop/closed-loop control unit (12) triggers on the basis of the measuring signals for detecting the gear positions the at least one actuator (6) for setting the brake torque of the primary retarder (1) in such a way that the brake torque of the primary retarder does not exceed a maximum brake torque permissible for a driving gear.

2. An electronic controlling device as claimed in claim 1, **characterized in that** the means for receiving measuring signals for detecting gear positions comprise means for detecting the currently engaged driving gear.

3. An electronic controlling device as claimed in claim 1 or 2, **characterized in that** the means for receiving measuring signals for detecting gear positions comprises at least one of the following means: means for receiving measuring signals for detecting the clutch state, means for receiving measuring signals for detecting the throttle state, as well as means for receiving measuring signals for detecting the engine speed.

4. An electronic controlling device as claimed in claim 3, **characterized in that** the means for receiving measuring signals for detecting gear positions comprise means for receiving measuring signals for detecting the current driving speed.

5. An electronic controlling device as claimed in claim 3 and 4, **characterized in that** the current driving signal is not detected directly, but is determined by means of a computing algorithm by the open-loop/closed-loop control unit based on the engine speed measuring signal and the driving speed measuring signal as well as vehicle parameters.

6. An electronic controlling device as claimed in one of the claims 1 to 5, **characterized in that** the open-loop/closed-loop control unit triggers the at least one actuator on the basis of the driving signal for the duration in which this driving gear is engaged in such away that the braking torque can assume at most a braking torque which corresponds to the maximum permissible braking torque in this driving gear.

7. An electronic controlling device as claimed in one of the claims 1 to 6, **characterized in that** on the basis of the idle gear signal the open-loop/closed-loop control unit triggers the at least one actuator for setting the braking torque of the primary retarder in such a way that the braking movement corresponds to a predetermined reduced braking torque for the time in which the idle gear is engaged.

8. An electronic controlling device as claimed in one of the claims 1 to 8, **characterized in that** the at least one actuator comprises a control valve for setting the braking torque of the primary braking system.

9. An electronic controlling device as claimed in claim 8, **characterized in that** the at least one actuator for setting the braking torque of the primary braking system further comprises a changeover valve.

10. A method for setting the braking torque of a primary retarder disposed in the drive train of a vehicle, comprising the following steps:
10.1 a gear position in a vehicle is detected on the basis of measuring signals;
10.2 at least one actuator for setting the braking torque of the primary retarder is actuated depending on the measuring signals, with the method being **characterized in that**
10.3 the measuring signals further comprising a measuring signal which defines the idle gear state and that
10.4 the at least one actuator for setting the braking torque of the primary retarder is triggered by the at least one open-loop/closed-loop control unit on the basis of the measuring signals received according to step 11.1 in such a way that the braking torque of the primary braking system does not exceed the maximum braking torque permissible for a vehicle.

11. A method as claimed in claim 10, **characterized in that** the measuring signals comprise at least one of the following measuring signals: a first measuring signal indicating the driving gear; a second measuring signal indicating the clutch state, a third measuring signal indicating the throttle state and a fourth measuring signal indicating the engine speed.

12. A method as claimed in one of the claims 10 or 11, **characterized in that** the driving gear signal is determined by means of a computing algorithm by the open-loop/closed-loop control unit on the basis of the engine speed measuring signal and the driving speed measuring signal as well as vehicle parameters.

## Revendications

1. Dispositif électronique de régulation pour l'ajustement du couple de freinage d'un retardateur primaire (1) disposé dans la transmission d'un véhicule, comprenant :
1.1 au moins une unité de commande et de régulation (12),
1.2 des moyens de réception de signaux de mesure pour la reconnaissance des rapports de la boîte de vitesses,
1.3 au moins un organe d'ajustement (6) pour l'ajustement du couple de freinage du retardateur primaire,
le dispositif de régulation (12) étant **caractérisé en ce que**
1.4 les moyens de réception des signaux de mesure pour la reconnaissance des rapports de boîte de vitesses comprennent des moyens (26) de détection d'un signal de point mort, et
1.5 l'unité de commande et de régulation (12) au nombre d'une au moins commande l'organe d'ajustement (6) au nombre d'un au moins pour l'ajustement du couple de freinage du retardateur primaire (1) en fonction des signaux de mesure pour la reconnaissance des rapports de boîte de vitesses, de telle manière que le couple de freinage du retardateur primaire ne dépasse pas un couple de freinage maximal pour un rapport de boîte de vitesses donné.

2. Dispositif électronique de régulation selon la revendication 1, **caractérisé en ce que** les moyens de réception des signaux de mesure pour la reconnaissance des rapports de boîte de vitesses comprennent des moyens pour la détection du rapport enclenché à un moment donné.

3. Dispositif électronique de régulation selon la revendication 1 ou 2, **caractérisé en ce que** les moyens de réception des signaux de mesure pour la reconnaissance des rapports de boîte de vitesses comprennent au moins l'un des moyens suivants : moyens de réception de signaux de mesure pour la reconnaissance de l'état de l'embrayage, moyens de réception de signaux de mesure pour la reconnaissance de la position de l'accélérateur et moyens de réception de signaux de mesure pour la reconnaissance du régime du moteur.

4. Dispositif électronique de régulation selon la revendication 3, **caractérisé en ce que** les moyens de réception des signaux de mesure pour la reconnaissance des rapports de boîte de vitesses comprennent des moyens pour la réception de signaux de mesure pour la reconnaissance de la vitesse de circulation.

5. Dispositif électronique de régulation selon las revendications 3 et 4, **caractérisé en ce que** le signal de rapport de boîte de vitesses actuel n'est pas directement capté mais déterminé par l'unité de commande et de régulation au moyen d'un algorithme de calcul à partir du signal de régime moteur et du signal de vitesse de circulation ainsi que de paramètres du véhicule.

6. Dispositif électronique de régulation selon l'une quelconque des revendications 1 à 5, **caractérisé en ce que** l'unité de commande et de régulation commande l'organe d'ajustement au nombre d'un au moins en fonction du signal de rapport de vitesse pendant la durée où ce rapport est enclenché, de telle sorte que le couple de freinage du retardateur primaire ne puisse atteindre au maximum qu'un couple de freinage correspondant au couple de freinage maximal admissible à ce rapport.

7. Dispositif électronique de régulation selon l'une quelconque des revendications 1 à 6, **caractérisé en ce que** l'unité de commande et de régulation commande l'organe d'ajustement au nombre d'un au moins pour l'ajustement du couple de freinage en fonction du signal de point mort de telle sorte que le couple de freinage pendant la durée du point mort corresponde à un couple de freinage réduit prédéterminé.

8. Dispositif électronique de régulation selon l'une quelconque des revendications 1 à 7, **caractérisé en ce que** l'organe d'ajustement au nombre d'un au moins pour l'ajustement du couple de freinage comprend une soupape de régulation.

9. Dispositif électronique de régulation selon la revendication 8, **caractérisé en ce que** l'organe d'ajustement au nombre d'un au moins pour l'ajustement du couple de freinage comprend en outre une soupape d'inversion.

10. Procédé pour l'ajustement du couple de freinage d'un retardateur primaire disposé dans la transmission d'un véhicule, comprenant les étapes suivantes :
10.1 détermination du rapport de boîte de vitesses du véhicule à l'aide de signaux de mesure,
10.2 actionnement en fonction des signaux de mesure d'au moins un organe d'ajustement pour l'ajustement du couple de freinage du retardateur primaire,
10.3 présence dans les signaux de mesure d'un signal de mesure indiquant l'état de point mort,
10.4 commande de l'organe d'ajustement au nombre d'un au moins pour l'ajustement du couple de freinage par au moins une unité de commande et de régulation en fonction des signaux de mesure captés à l'étape 10.1, de telle sorte que le couple de freinage du système de freinage primaire ne dépasse pas le couple de freinage maximal admissible pour un rapport donné.

11. Procédé selon la revendication 10, **caractérisé en ce que** les signaux de mesure comprennent au moins un des signaux de mesure suivants : un premier signal de mesure indiquant le rapport de boîte de vitesses, un second signal de mesure indiquant l'état de l'embrayage, un troisième signal de mesure indiquant la position de l'accélérateur et un quatrième signal de mesure indiquant le régime du moteur.

12. Procédé selon l'une quelconque des revendications 10 ou 11, **caractérisé en ce que** le signal de rapport de boîte de vitesses est déterminé par l'unité de commande et de régulation au moyen d'un algorithme de calcul à partir du signal de mesure du régime moteur et du signal de mesure de la vitesse de circulation ainsi que de paramètres du véhicule.
